# EUROPÄISCHE PATENTSCHRIFT

(11) **EP 3 086 429 B1**
(45) Veröffentlichungstag und Bekanntmachung des Hinweises auf die Patenterteilung: **08.04.2020**
(21) Anmeldenummer: 16165933.9
(22) Anmeldetag: 19.04.2016
(51) Int. Cl.: H02J 3/18, H02J 3/38, H02P 9/00, H02P 13/06

(54) **STEUERUNGSSYSTEM FÜR EINE WINDENERGIEANLAGE ODER EINEN WINDPARK UND STEUERUNGSVERFAHREN**
CONTROL SYSTEM FOR A WIND TURBINE OR WIND FARM AND METHOD FOR CONTROLLING THE SAME
SYSTEME DE COMMANDE D'EOLIENNE OU DE PARC EOLIEN ET PROCEDE DE COMMANDE

(30) Priorität: 24.04.2015 DE 102015005252
(43) Veröffentlichungstag der Anmeldung: 26.10.2016
(73) Patentinhaber: Senvion GmbH, 22297 Hamburg (DE)
(72) Erfinder: Koestl, Tobias, 20457 Hamburg (DE); Diering, Markus, 24879 Neuberend (DE)
(74) Vertreter: Glawe, Delfs, Moll

(56) Entgegenhaltungen:
- WO-A1-2013/129958
- WO-A2-2012/000515

## Beschreibung

Die Erfindung betrifft ein Steuerungssystem für eine Windenergieanlage oder für einen Windpark. Das Steuerungssystem umfasst eine Transformatorsteuerung, die dazu ausgelegt ist, eine Information über einen Istzustand eines elektrischen Netzes zu verarbeiten, um eine Steuervorgabe für einen Transformator mit einstellbarem Übersetzungsverhältnis zu ermitteln. Die Erfindung betrifft außerdem ein entsprechendes Steuerungsverfahren.

Die in Windenergieanlagen bzw. Windparks erzeugte elektrische Energie wird üblicherweise in ein elektrisches Netz eingespeist. Die elektrische Spannung in der Windenergieanlage bzw. dem Windpark ist normalerweise niedriger als die Spannung in dem elektrischen Netz.Für die Übersetzung der Spannung zwischen der Windenergieanlage bzw. dem Windpark und dem elektrischen Netz ist ein Transformator vorgesehen. Wenn der Transformator ein einstellbares Übersetzungsverhältnis hat, kann er dazu verwendet werden, die Spannungsniveaus untereinander anzupassen. Es ist bekannt, Steuervorgaben an einen solchen Transformator zu senden, gemäß denen der Transformator das Übersetzungsverhältnis verändert, siehe EP 1 880 459 B1, EP 2 333 926 A2, WO 2012/000515 A2.

Der Erfindung liegt die Aufgabe zugrunde, eine Steuerung und ein Steuerungsverfahren vorzustellen, mit denen eine bessere Einbindung der Windenergieanlagen bzw. des Windparks in das elektrische Netz ermöglicht wird. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Erfindungsgemäß, wie in Anspruch 1 definiert, umfasst das Steuerungssystem eine übergeordnete Steuerung. Die Transformatorsteuerung ist dazu ausgelegt, die für den Transformator bestimmte Steuervorgabe zurückzuhalten, bis die Steuervorgabe von der übergeordneten Steuerung freigegeben ist.

Mit der Erfindung werden Schaltvorgänge des einstellbaren Transformators einer zweistufigen Kontrolle unterstellt. In der Transformatorsteuerung kann anhand lokaler Gegebenheiten eine Aussage getroffen werden, ob ein Schaltvorgang des Transformators vorgenommen werden sollte. Kommt die Transformatorsteuerung zu dem Ergebnis, dass ein Schaltvorgang durchgeführt werden sollte, so schließt sich eine Überprüfung durch die übergeordnete Steuerung an. Die übergeordnete Steuerung entscheidet, ob der Schaltvorgang, der bei Betrachtung der lokalen Gegebenheiten erforderlich zu sein scheint, tatsächlich erfolgen sollte. Der Schaltvorgang wird dann von der übergeordneten Steuerung freigegeben. Wenn die Freigabe der übergeordneten Steuerung vorliegt, wird der Schaltvorgang durchgeführt. Es kann so beispielsweise vermieden werden, dass der Schaltvorgang zu einem Zeitpunkt durchgeführt wird, zu dem er das Netz destabilisieren könnte. Die Information über den Istzustand des elektrischen Netzes, die in der Transformatorsteuerung verarbeitet wird, kann beispielsweise die Spannung im elektrischen Netz betreffen. Der Begriff elektrisches Netz versteht sich als Oberbegriff für die verschiedenen Abschnitte, durch die die von den Windenergieanlagen erzeugte elektrische Energie geleitet wird. Das elektrische Netz kann insbesondere die elektrischen Komponenten einer Windenergieanlage, ein windparkinternes Netz sowie ein Übertragungsnetz des Netzbetreibers umfassen. Der Spannungswert kann sich auf die Spannung beziehen, die an dem Transformator anliegt, für den die Transformatorsteuerung eine Steuervorgabe ermittelt. Es kann sich um einen Spannungswert an der Eingangsseite des Transformators und/oder um einen Spannungswert an der Ausgangsseite des Transformators handeln. Der Spannungswert kann in direkter Nachbarschaft zu dem Transformator oder in einem Abstand zu dem Transformator aufgenommen werden. Möglich ist beispielsweise, dass der Transformator am Fuss einer Windenergieanlage angeordnet ist und der Spannungswert in der Gondel der Windenergieanlage aufgenommen wird.

Die Begriffe Eingangsseite und Ausgangsseite beziehen sich auf die Flussrichtung der elektrischen Energie, die von der Windenergieanlage kommend über das windparkinterne Netz in das Übertragungsnetz geleitet wird. In aller Regel ist die Spannung auf der Eingangsseite des Transformators niedriger als die Spannung auf der Ausgangsseite des Transformators.

Die Transformatorsteuerung kann dazu ausgelegt sein, beim Ermitteln der Steuervorgabe für den Transformator eine Abweichung zwischen dem Istwert der Spannung und einem Sollwert der Spannung zu berücksichtigen. Insbesondere kann die Steuervorgabe anhand eines Totbands ermittelt werden, das sich von dem Sollwert der Spannung nach oben und nach unten erstreckt. Das Totband kann symmetrisch oder asymmetrisch bezogen auf den Sollwert der Spannung ausgerichtet sein. Weiterhin ist es möglich, dass die Grenzen des Totbands abhängig von verschiedenen Betriebszuständen des Windparks/der Windenergieanlage variabel gewählt werden. Solange der Istwert der Spannung innerhalb des Totbands liegt, wird keine Steuervorgabe ermittelt, die einem Schaltvorgang des Transformators entspricht. Sobald der Istwert der Spannung das Totband verlässt, erzeugt die Transformatorsteuerung eine Steuervorgabe, die einem Schaltvorgang des Transformators entspricht. Dass die Transformatorsteuerung eine Steuervorgabe erzeugt, ist so zu verstehen, dass die Transformatorsteuerung feststellt, dass bei lokaler Betrachtung die Voraussetzungen für einen Schaltvorgang vorliegen. Erzeugen der Steuervorgabe umfasst nicht, dass die Steuervorgabe an den Transformator geleitet wird, um einen Schaltvorgang auszulösen.

Gemäß einer Weiterbildung der Erfindung kann das Totband ein zweigliedriges Totband sein. Dabei liegen die beiden Grenzen des ersten Totbands vorzugsweise näher an dem Sollwert als die beiden Grenzen des zweiten Totbands. Die Transformatorsteuerung kann so eingerichtet sein, dass sie bei Verlassen des ersten Totbands anders reagiert als bei Verlassen des zweiten Totbands. Beispielsweise kann nur bei Verlassen des ersten Totbands die Freigabe von der übergeordneten Steuerung eingeholt werden, während bei Verlassen des zweiten Totbands die Steuervorgabe ohne Freigabe durch eine übergeordnete Steuerung an den Transformator geleitet wird. Das erste Totband und/oder das zweite Totband können symmetrisch oder asymmetrisch bezogen auf einen Sollwert der Spannung angeordnet sein.

Die Transformatorsteuerung kann so ausgelegt sein, dass sie eine Setzverzögerung verstreichen lässt, bevor sie die Steuervorgabe an den Transformator leitet. Die Setzverzögerung kann mit dem Auftreten des Ereignisses beginnen, durch das die Steuervorgabe ausgelöst wird. Die Anfrage an die übergeordnete Steuerung kann erfolgen, während die Setzverzögerung läuft. Die Steuervorgabe kann in diesem Fall so lange von der Transformatorsteuerung zurückgehalten werden, bis sowohl die Setzverzögerung abgelaufen ist als auch die Freigabe von der übergeordneten Steuerung vorliegt. Alternativ ist möglich, dass die Anfrage an die übergeordnete Steuerung erst dann erfolgt, wenn die Setzverzögerung abgelaufen ist. In diesem Fall kann die Steuervorgabe so lange zurückgehalten werden, bis die Freigabe von der übergeordneten Steuerung vorliegt. Durch eine solche Setzverzögerung wird erreicht, dass ein Schaltvorgang des Transformators nicht durch ein sehr kurzfristiges Ereignis ausgelöst werden kann, sondern nur durch einen Zustand, der für eine vorgegebene Zeitspanne andauert. Es findet also kein Schaltvorgang statt, wenn das auslösende Ereignis während der Setzverzögerung wieder wegfällt, also beispielsweise die Spannung in das Totband zurückkehrt.

Es ist möglich, eine Setzverzögerung von fest vorgegebener Länge zu verwenden. Alternativ kann die Länge unterschiedlich gewählt werden in Abhängigkeit von dem Ereignis, durch das die Setzverzögerung in Gang gesetzt wird. Beispielsweise kann die Länge der Setzverzögerung unterschiedlich gewählt werden, abhängig davon, ob der Istwert der Spannung nach oben oder nach unten hin vom Sollwert abweicht.

Die Länge der Setzverzögerung kann in Abhängigkeit davon gewählt werden, wie weit der Istwert der Spannung sich vom Sollwert der Spannung entfernt hat. Dabei kann die Setzverzögerung desto kürzer sein, je größer die Abweichung ist. Die Länge der Setzverzögerung kann in Stufen oder kontinuierlich variiert werden. Es kann vorgesehen sein, dass die Länge der Setzverzögerung auf null gesetzt wird, wenn die Abweichung zwischen Istwert und Sollwert der Spannung größer ist als ein vorgegebener Schwellwert. Zusätzlich oder alternativ dazu ist es möglich, bei Überschreiten eines solchen Schwellwerts auf die Freigabe-Anfrage an die übergeordnete Steuerung zu verzichten und die Steuervorgabe direkt an den Transformator zu leiten.

Zum Ermitteln des Istwerts der Spannung kommen verschiedene Verfahren in Betracht. Zum Beispiel kann der Istwert der Spannung als gleitender Mittelwert der drei Phasen ermittelt werden. Alternativ kann als Istwert der Spannung der Wert derjenigen Phase verwendet werden, der die größte Abweichung vom Sollwert der Spannung hat.

Wenn die Transformatorsteuerung mit einem zweigliedrigen Totband arbeitet, kann vorgesehen sein, dass bei Verlassen des ersten Totbands eine andere Setzverzögerung gilt als bei Verlassen des zweiten Totbands. Bevorzugt ist die Setzverzögerung des zweiten Totbands kürzer als die Setzverzögerung des ersten Totbands. Insbesondere ist möglich, dass bei Verlassen des zweiten Totbands eine Setzverzögerung von null gilt, was bedeutet, dass die Steuervorgabe unmittelbar nach Verlassen des zweiten Totbands an den Transformator geleitet wird.

Die erfindungsgemäße Steuerung kann so eingerichtet sein, dass die Transformatorsteuerung eine Freigabe-Anfrage an die übergeordnete Steuerung sendet, wenn sie eine Steuervorgabe erzeugt hat. Die Anfrage kann unmittelbar nach Erzeugen der Steuervorgabe oder zu einem späteren Zeitpunkt (beispielsweise nach Ablauf der Setzverzögerung) erfolgen. Nach dem Eingang der Anfrage kann die übergeordnete Steuerung anhand ihrer Kriterien prüfen, ob sie die Steuervorgabe freigibt. Ist dies der Fall, kann die übergeordnete Steuerung eine Freigabe an die Transformatorsteuerung senden. Nach Erhalt der Freigabe ist die Transformatorsteuerung frei, die Steuervorgabe an den Transformator zu leiten, sodass der Transformator einen Schaltvorgang gemäß der Steuervorgabe durchführt, um das Übersetzungsverhältnis zwischen der Eingangsseite und der Ausgangsseite des Transformators zu ändern.

Die übergeordnete Steuerung kann Informationen aus dem Windpark/der Windenergieanlage und/oder von außen erhaltene Informationen verarbeiten, um zu entscheiden, ob die Steuervorgabe freigegeben wird. Bei den Informationen aus dem Windpark/der Windenergieanlage kann es sich beispielsweise um Messwerte über den Zustand des elektrischen Netzes oder um Messwerte über Umgebungsbedingungen handeln. Es kann sich auch um Informationen handeln, die von anderen Komponenten des Windparks/der Windenergieanlage an die übergeordnete Steuerung gesendet werden. Die Information von außen kann beispielsweise eine Anforderung sein, die von einer Zentrale eines Übertragungsnetzes oder eines Verteilnetzes an die übergeordnete Steuerung gesendet wird.

In der übergeordneten Steuerung kann durch ein Ereignis eine Sperrzeit in Gang gesetzt werden. Die übergeordnete Steuerung kann so eingerichtet sein, dass sie keine Freigabe eines Transformator-Schaltvorgangs erteilt, solange eine Sperrzeit in Gang ist. Die Ereignisse, die eine Sperrzeit auslösen können, können in der übergeordneten Steuerung hinterlegt sein.

Ein Ereignis, dass eine Sperrzeit auslösen kann, kann beispielsweise ein Schaltvorgang eines Transformators sein. Ein Schaltvorgang eines Transformators kann generell dazu beitragen, das Netz in einen weniger stabilen Zustand zu bringen. Deswegen ist es von Vorteil, wenn zwischen zwei Schaltvorgängen ein zeitlicher Abstand liegt. Die Länge der Sperrzeit kann davon abhängig sein, welcher Transformator einen Schaltvorgang durchgeführt hat. Beispielsweise kann die Sperrzeit bei einem Schaltvorgang eines Windpark-Transformators länger sein als bei einem Schaltvorgang eines Windenergieanlagen-Transformators.

Eine Sperrzeit kann auch durch irreguläre Ereignisse im elektrischen Netz in Gang gesetzt werden. Das irreguläre Ereignis kann ein Netzfehler beispielsweise in Form einer Frequenzabweichung bzw. einer zu hohen oder zu niedrigen Spannung im Netz (LVRT, OVRT) sein. In vielen Fällen sind der Windpark bzw. die Windenergieanlage so eingerichtet, dass sie versuchen, derartigen Netzfehlern entgegenzusteuern. Es ist dann häufig unerwünscht, dass durch einen Schaltvorgang eines Transformators zusätzlich Einfluss auf den Zustand des Netzes genommen wird.

Auch kann eine Sperrzeit in Gang gesetzt werden, wenn Komponenten des Windparks oder der Windpark insgesamt zugeschaltet oder abgeschaltet werden. Insbesondere sind solche Ereignisse ein Softstart oder Softstopp des Windparks sowie eine Abschaltung/Netztrennung einzelner Windenergieanlagen. Auch das Schalten einer Blindleistungseinheit kann ein Ereignis sein, durch das eine Sperrzeit in Gang gesetzt wird. Insbesondere kann es sich um eine statische Blindleistungseinheit handeln, die dem Windpark zugeordnet ist und nicht einer einzelnen Windenergieanlage. Möglich ist auch, dass eine Sperrzeit in Gang gesetzt wird, wenn die Leistungseinspeisung erhöht oder vermindert wird.

Schließlich kann das Ereignis auch der Eingang einer externen Vorgabe sein. Beispielsweise kann eine Kontrollstelle des Übertragungsnetzes dem Windpark ausdrücklich Schaltvorgänge der Transformatoren verbieten. Solange die Vorgabe von außen besteht, gibt die übergeordnete Steuerung keine Schaltvorgänge frei. Die Vorgabe von außen kann auch ein neuer Sollwert für die Blindleistung sein. Während der Windpark bzw. die Windenergieanlage sich auf einen neuen Blindleistungs-Sollwert einstellt, können Schaltvorgänge der Transformatoren gesperrt sein.

Die Länge der Sperrzeit kann jeweils individuell an das auslösende Ereignis angepasst sein. Die Sperrzeit kann gleichzeitig mit dem Ereignis beginnen. Möglich ist auch, dass die Sperrzeit schon vor dem Ereignis beginnt. Dies kann beispielsweise der Fall sein, wenn die übergeordnete Steuerung schon vorab informiert wird, dass das Ereignis stattfinden wird. Bei vorhersehbaren Ereignissen, wie beispielsweise einem Schaltvorgang eines Transformators oder einer Änderung eines Sollwerts, ist eine solche Vorab-Information der übergeordneten Steuerung möglich.

Die übergeordnete Steuerung ist vorzugsweise an einen Kommunikationskanal angeschlossen, über den sie die Informationen zu den Ereignissen erhält, die eine Sperrzeit auslösen können. Der Kommunikationskanal kann sich insbesondere zu den einzelnen Windenergieanlagen des Windparks, zum Parkmaster, zu einer Kontrollstelle eines Übertragungsnetzes oder eines Verteilnetzes, zu den Transformatoren der Windenergieanlagen, zu einem Transformator des Windparks und/oder zu statischen bzw. dynamischen Blindleistungseinheiten erstrecken.

Die übergeordnete Steuerung kann dazu ausgelegt sein, dass sie eine von der Transformatorsteuerung erhaltene Anfrage freigibt, sofern keine Sperrzeit läuft. Für den Fall, dass mehrere Anfragen gleichzeitig vorliegen, kann die übergeordnete Steuerung dazu ausgelegt sein, einer der Anfragen Vorrang einzuräumen. Eine Freigabe der zweiten Anfrage erfolgt erst dann, wenn eine durch den ersten Schaltvorgang in Gang gesetzte Sperrzeit abgelaufen ist.

Liegt eine Mehrzahl von Freigabe-Anfragen vor, kann die übergeordnete Steuerung dazu ausgelegt sein, jeder Freigabe-Anfrage eine Priorität zuzuordnen. Nach Ablauf aller Sperrzeiten kann die Anfrage mit der höchsten Priorität freigegeben werden. Zum nächsten Zeitpunkt, zu dem alle Sperrzeiten abgelaufen sind, kann die Anfrage mit der nächsthöheren Priorität freigegeben werden usw. Um den Anfragen eine Priorität zuordnen zu können, kann die übergeordnete Steuerung die Betriebspunkte der Windenergieanlagen berücksichtigen. Insbesondere kann der Betriebspunkt derjenigen Windenergieanlage berücksichtigt werden, auf deren Transformator sich die Anfrage bezieht. Dabei können Informationen berücksichtigt werden wie die Bereitstellung von Blindleistung, die Einspeisung von Wirkleistung, die Klemmenspannung, die Schaltstellung des Transformators usw.

Bezieht sich die Anfrage auf den Transformator des Windparks, so können ebenfalls Informationen über die Betriebspunkte einzelner Windenergieanlagen oder den Betriebszustand einzelner Transformatoren von Windenergieanlagen berücksichtigt werden, um der Anfrage eine Priorität zuzuordnen. Beispielsweise kann die übergeordnete Steuerung so eingerichtet sein, dass sie dem Transformator des Windparks nur dann eine hohe Priorität zuordnet, wenn mehrere Windenergieanlagen einen vorgegebenen Spannungsbereich in derselben Richtung verlassen haben und/oder wenn mehrere Transformatoren von Windenergieanlagen ihre äußerste Schaltposition eingenommen haben. Hierfür ist es von Vorteil, wenn in der übergeordneten Steuerung zusammen mit der Freigabe-Anfrage die Information zur Verfügung steht, in welche Richtung der geplante Schaltvorgang des Windpark-Transformators erfolgen soll. Entspricht die Richtung der Richtung, die von mehreren Windenergieanlagen-Transformatoren angefragt wurde, so kann dem Schaltvorgang des Windpark-Transformators eine höhere Priorität zugeordnet werden als den Schaltvorgängen der einzelnen Transformatoren.

Die übergeordnete Steuerung kann ferner so eingerichtet sein, dass sie einen Schaltvorgang eines Transformators aktiv auslöst, ohne dass sie zuvor einer Anfrage von der Transformatorsteuerung erhalten hat. Insbesondere kann die übergeordnete Steuerung dazu ausgelegt sein, einen Schaltvorgang des Windpark-Transformators aktiv auszulösen. Dies kann insbesondere dann sinnvoll sein, wenn eine vorgegebene Anzahl an Windenergieanlagen-Transformatoren die äußerste Schaltstellung erreicht hat. Außerdem ist es auf diese Weise möglich, die Spannung im windparkinternen Netz voreinzustellen (Vorsteuerung). Anschließend können die Klemmenspannungen der einzelnen Windenergieanlagen über die Windenergieanlagen-Transformatoren solange nachgestellt werden, bis sie sich in einem optimalen Bereich befinden (Feinjustierung).

Wird ein Schaltvorgang eines Transformators veranlasst oder freigegeben, so kann die Parkregelung kurzzeitig eingefroren werden. So kann beispielsweise der Vorgabewert für den Blindleistungsregler konstant gehalten werden. Damit wird verhindert, dass die Parkregelung auf transiente Vorgänge falsch reagiert. Die Dauer der Einfrierzeit kann davon abhängig gemacht werden, ob es sich um einen Schaltvorgang eines Windenergieanlagen-Transformators oder einen Schaltvorgang eines Windpark-Transformators handelt.

Vor einer erneuten Zuschaltung einer Windenergieanlage zum Beispiel nach einer Netzabschaltung oder einem Netzausfall kann der Transformator in eine für das elektrische Netz optimale Schaltstellung gebracht werden. So können zum Beispiel die Einschaltströme reduziert werden.

Die übergeordnete Steuerung kann der Ebene der Windenergieanlage oder der Ebene des Windparks zugeordnet sein. Möglich ist auch, dass eine erste übergeordnete Steuerung und eine zweite übergeordnete Steuerung vorgesehen sind und dass die Steuervorgabe nur freigegeben wird, wenn beide übergeordneten Steuerungen die Freigabe erteilen. Die erste übergeordnete Steuerung kann einer Windenergieanlage und die zweite übergeordnete Steuerung dem Windpark zugeordnet sein. Die übergeordnete Steuerung kann insbesondere ein Bestandteil einer Windenergieanlagen-Steuerung oder ein Bestandteil einer Windpark-Steuerung (Parkmaster) sein. Ein Parkmaster ist dazu ausgelegt, eine Leitungsfunktion für eine Mehrzahl von Windenergieanlagen zu übernehmen und insbesondere Vorgaben für den Betrieb mehrerer Windenergieanlagen zu ermitteln.

Anspruch 13 betrifft eine Steuerung nach einem der übergeordneten Ansprüche für eine Windenergieanlage mit einem Rotor, einem Generator, einem Umrichter und einem Transformator, wobei der Rotor den Generator antreibt, um elektrische Energie zu erzeugen, und wobei die elektrische Energie über den Umrichter und den Transformator in das windparkinterne Netz eingespeist wird. Die Windenergieanlage umfasst eine Windenergieanlagen-Steuerung, die dazu ausgelegt ist, das Umrichter-Generator-System der Windenergieanlage zu steuern. Die Windenergieanlagen-Steuerung umfasst eine Transformatorsteuerung und eine übergeordnete Steuerung, die gemäß der Erfindung ausgebildet sind.

Der Transformator ist so gestaltet, dass das Übersetzungsverhältnis zwischen der Spannung auf der Eingangsseite und der Spannung auf der Ausgangsseite einstellbar ist. Das Übersetzungsverhältnis kann in Stufen einstellbar sein. Der Begriff Schaltvorgang umfasst das Schalten eines Stufen-Transformators.

Anspruch 12 betrifft eine Steuerung nach einem der übergeordneten Ansprüche für einen Windpark mit einer Mehrzahl von Windenergieanlagen, mit einem Parkmaster und mit einem Transformator. Bei dem Transformator kann es sich um einen Transformator einer Windenergieanlage oder um einen Transformator des Windparks handeln. Der Windpark kann auch eine Mehrzahl von Transformatoren umfassen. Dem Parkmaster ist eine übergeordnete Steuerung des Windparks zugeordnet, die gemäß der Erfindung ausgebildet ist. Die übergeordnete Steuerung kann räumlich mit dem Parkmaster verbunden sein oder räumlich von dem Parkmaster getrennt sein. Die Erfindung betrifft außerdem eine oder mehrere erfindungsgemäß ausgebildete Transformatorsteuerungen. Die Transformatorsteuerung kann einem Transformator des Windparks oder einem Transformator einer Windenergieanlage zugeordnet sein. Bei einem Transformator einer Windenergieanlage liegt üblicherweise auf der Eingangsseite die Spannung der elektrischen Komponenten der Windenergieanlage und auf der Ausgangsseite die Spannung des windparkinternen Netzes an. Bei dem Transformator eines Windparks liegt üblicherweise auf der Eingangsseite die Spannung des windparkinternen Netzes und auf der Ausgangsseite die Spannung des Übertragungsnetzes an. Sowohl der Windpark-Transformator als auch die Windenergieanlagen-Transformatoren können ein einstellbares Übersetzungsverhältnis haben. Die Transformatoren sind so eingerichtet, dass die Schaltvorgänge unter Last erfolgen können.

Die Erfindung betrifft außerdem ein Verfahren gemäß Anspruch 14 zum Steuern einer Windenergieanlage oder eines Windparks. Bei dem Verfahren wird eine Information über einen Istzustand eines elektrischen Netzes verarbeitet, um eine Steuervorgabe für einen Transformator mit einstellbarem Übersetzungsverhältnis zu ermitteln. Erfindungsgemäß wird die Steuervorgabe zurückgehalten, bis die Steuervorgabe von einer übergeordneten Steuerung freigegeben ist.

Das Verfahren kann mit weiteren Merkmalen fortgebildet werden, die im Zusammenhang der erfindungsgemäßen Steuerung, der erfindungsgemäßen Windenergieanlage oder des erfindungsgemäßen Windparks beschrieben sind. Das Steuerungssystem, die Windenergieanlage und der Windpark können mit weiteren Merkmalen fortgebildet werden, die im Zusammenhang der erfindungsgemäßen Steuerung beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: einen Windpark mit einer Ausführungsform eines erfindungsgemäßen Steuerungssystems;
- Fig. 2:: den Spannungsverlauf an einem spannungsgeregelten Transformator;
- Fig. 3:: einen beispielhaften Ablauf des erfindungsgemäßen Steuerungsverfahrens;
- Fig. 4:: eine alternative Ausführungsform des erfindungsgemäßen Steuerungsverfahrens;
- Fig. 5:: eine schematische Darstellung einer erfindungsgemäßen Windenergieanlage;
- Fig. 6:: eine Ausführungsform eines erfindungsgemäßen Steuerungssystems für eine Windenergieanlage;
- Fig. 7:: ein Steuerungssystem für eine Windenergieanlage;
- Fig. 8:: die Ansicht aus Fig. 7 bei einer alternativen Ausführungsform;
- Fig. 9:: eine alternative Ausführungsform eines erfindungsgemäßen Steuerungssystems; und
- Fig. 10:: den Spannungsverlauf an einem spannungsgeregelten Transformator.

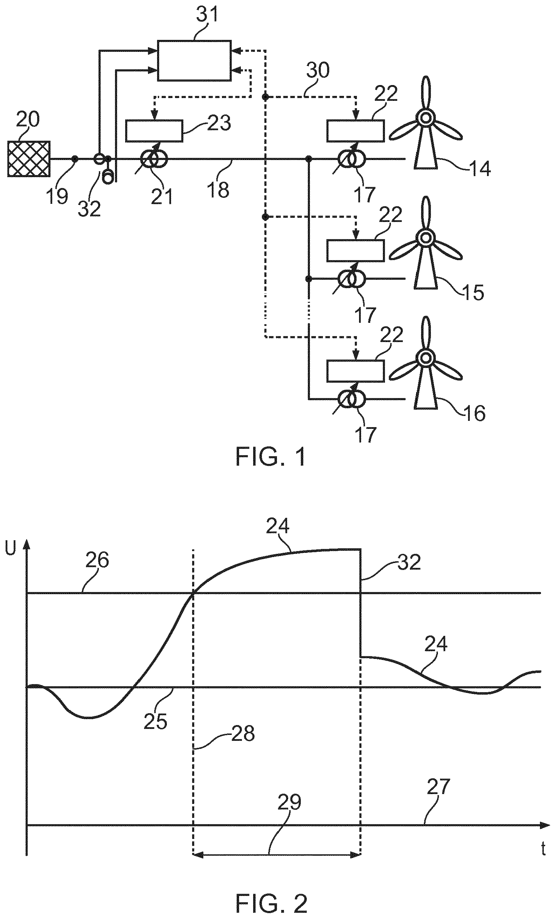

Bei einem in Fig. 1 gezeigten Windpark sind drei Windenergieanlagen 14, 15, 16 beispielhaft für eine größere Anzahl von Windenergieanlagen des Windparks dargestellt. In jeder der Windenergieanlagen wird ein Generator von einem Rotor angetrieben, um elektrische Energie zu erzeugen. Die elektrische Energie wird mithilfe eines Umrichters in ein windparkinternes Netz 18 eingespeist. Ein Windenergieanlagen-Transformator 17 übersetzt die Spannung von der niedrigen Spannung in den elektrischen Komponenten der Windenergieanlage 14, 15, 16 auf die mittlere Spannung im windparkinternen Netz 18. Das windparkinterne Netz 18 erstreckt sich zu einem Übergabepunkt 19, der die Schnittstelle zwischen dem windparkinternen Netz 18 und einem Übertragungsnetz 20 eines Netzbetreibers bildet. Ein Windpark-Transformator 21 übersetzt die Spannung von der mittleren Spannung im windparkinternen Netz 18 auf die Hochspannung im Übertragungsnetz 20.

Sowohl die Windenergieanlagen-Transformatoren 17 als auch der Windpark-Transformator 21 sind so eingerichtet, dass das Übersetzungsverhältnis zwischen der niedrigeren Spannung auf der Eingangsseite und der höheren Spannung auf der Ausgangsseite unter Last verändert werden kann (OLTC, On-load tap changer). Schaltvorgänge der Transformatoren 17, 21, mit denen das Übersetzungsverhältnis geändert wird, erfolgen unter der Kontrolle einer Transformatorsteuerung. Jedem Windenergieanlagen-Transformator 17 ist eine Transformatorsteuerung 22 zugeordnet, dem Windpark Transformator 21 ist eine Transformatorsteuerung 23 zugeordnet.

In den Transformatorsteuerungen 22, 23 wird eine Information über den Istwert der Spannung auf der Eingangsseite des jeweiligen Transformators 17, 21 verarbeitet. Gemäß Fig. 2 sind die Transformatorsteuerungen 22, 23 dazu ausgelegt, den Istwert 24 der Spannung, der in Fig. 2 über der Zeit t aufgetragen ist, mit einem Sollwert 25 der Spannung zu vergleichen. Um den Sollwert 25 erstreckt sich ein Totband bis zu einem oberen Grenzwert 26 und bis zu einem unteren Grenzwert 27. Solange der Istwert 24 der Spannung innerhalb des Totbands 26, 27 liegt, hat die Transformatorsteuerung 22, 23 keinen Anlass, das Übersetzungsverhältnis des zugehörigen Transformators 17, 21 zu verändern.

Verlässt der Istwert 24 der Spannung das Totband 26, 27, so erzeugt die Transformatorsteuerung 22, 23 eine Steuervorgabe, die einem Schaltvorgang des zugehörigen Transformators 17, 21 entspricht. Hat der Istwert 94 der Spannung den oberen Grenzwert 26 überschritten, definiert die Steuervorgabe einen Schaltvorgang, durch den die Spannung auf der Eingangsseite des Transformators 17, 21 sinkt. Hat der Istwert 24 der Spannung den unteren Grenzwert 27 überschritten, so definiert die Steuervorgabe einen Schaltvorgang des Transformators 17, 21, durch den die Spannung auf der Eingangsseite des Transformators 17, 21 steigt. Die Steuervorgabe wird zunächst nur in der Transformatorsteuerung 22, 23 erzeugt, jedoch noch nicht an den jeweiligen Transformator 17, 21 geleitet. Alleine durch das Erzeugen der Steuervorgabe findet also noch kein Schaltvorgang statt.

In Fig. 2 wird die Steuervorgabe zum Zeitpunkt 28 erzeugt, zu dem der Istwert 24 der Spannung den Grenzwert 26 nach oben hin überschreitet. Gleichzeitig mit dem Erzeugen der Steuervorgabe wird eine Setzverzögerung 29 in Gang gesetzt, die eine vorgegebene Dauer hat. Ebenfalls gleichzeitig wird über ein Kommunikationsnetz 30 des Windparks eine Freigabe-Anfrage an eine übergeordnete Steuerung 31 gesendet. Die übergeordnete Steuerung 31 ist in diesem Ausführungsbeispiel ein Bestandteil des Parkmasters, der eine Leitungsfunktion für alle Windenergieanlagen 14, 15, 16 des Windparks übernimmt. Der Parkmaster verarbeitet zu diesem Zweck Messwerte über den Strom und die Spannung am Übergabepunkt 19. Die betreffenden Messwerte erhält der Parkmaster von Messvorrichtungen 32.

Die übergeordnete Steuerung 31 prüft nach Eingang der Freigabe-Anfrage anhand unten näher erläutert Kriterien, ob sie den Schaltvorgang freigibt. In dem Ausführungsbeispiel der Fig. 2 geht die Freigabe während der Setzverzögerung 29 bei der Transformatorsteuerung 22, 23 ein. Nach Ablauf der Setzverzögerung 29 leitet die Transformatorsteuerung 22, 23 die Steuervorgabe an den betreffenden Transformator 17, 21 weiter, der zum Zeitpunkt 32 den Schaltvorgang durchführt, durch den der Istwert 24 der Spannung wieder in das Totband 26, 27 zurückgeführt wird. Hätte die Transformatorsteuerung 22, 23 die Freigabe nicht erhalten, so wäre die Steuervorgabe weiterhin zurückgehalten worden und der Schaltvorgang hätte nicht stattgefunden. Ein Schaltvorgang ohne Freigabe ist nur in Ausnahmefällen möglich.

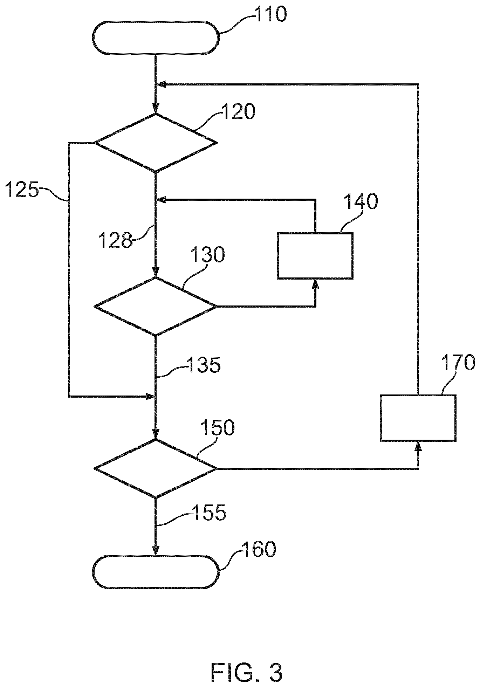

Der Ablauf in der übergeordneten Steuerung 31 nach Eingang der Freigabe-Anfrage wird anhand von Fig. 3 erläutert und zwar am Beispiel einer Anfrage von der Transformatorsteuerung 22 einer Windenergieanlage. Nach Eingang der Freigabe-Anfrage in Schritt 110 wird bei 120 zunächst abgefragt, ob weitere Freigabe-Anfragen in der übergeordneten Steuerung 31 anhängig sind. Ist dies nicht der Fall, geht es über den Abzweig 125 weiter zu 150, wo abgefragt wird, ob eine Sperrzeit in Gang ist. Ist keine Sperrzeit in Gang, geht es über 155 weiter bei 160 mit der Erteilung der Freigabe an die Transformatorsteuerung 22. Ist eine Sperrzeit in Gang, so wird über eine Warteschleife 170 abgewartet, bis alle Sperrzeiten abgelaufen sind.

Ergibt die Abfrage in Schritt 120, dass Freigabe-Anfragen von mehreren Transformatorsteuerungen 22 vorliegen, so geht es über 128 weiter zu Schritt 130, wo geprüft wird, ob die aktuelle Freigabe-Anfrage die höchste Priorität im Vergleich mit den anderen Freigabe-Anfragen hat. Ist dies der Fall, geht es über 135 weiter zu 150, wo wie gehabt geprüft wird, ob alle Sperrzeiten abgelaufen sind. Hat die Freigabe-Anfrage nicht die höchste Priorität wird über eine Warteschleife 140 gewartet, bis die Freigabe-Anfrage die höchste Priorität hat.

Zum Festlegen der Sperrzeiten verarbeitet die übergeordnete Steuerung 31 Informationen von anderen Komponenten des Windparks sowie Vorgaben, die die übergeordnete Steuerung 31 von einer Kontrollstelle des Übertragungsnetzes 20 erhält. Erhält die übergeordnete Steuerung 31 beispielsweise von der Transformatorsteuerung 23 die Information, dass ein Schaltvorgang des Windpark-Transformators 21 kurz bevorsteht, so wird eine Sperrzeit in Gang gesetzt, die über den Schaltvorgang des Windpark-Transformators 21 hinausreicht. Erhält die übergeordnete Steuerung 31 von der Messvorrichtung 32 die Information, dass ein Netzfehler vorliegt, so wird eine Sperrzeit in Gang gesetzt, bis der Netzfehler behoben ist. Erhält die übergeordnete Steuerung 31 die Information, dass eine der Windenergieanlagen 14, 15, 16 sich vom Netz getrennt hat, so wird eine Sperrzeit in Gang gesetzt, bis das Netz einen neuen Gleichgewichtszustand gefunden hat. Das Gleiche gilt nach dem Schalten einer statischen Blindleistungseinheit (nicht dargestellt) oder einer sprunghaften Änderung im Sollwert der Blindleistung. Sind mehrere Sperrzeiten parallel in Gang, so wartet die übergeordnete Steuerung 31 mit der Freigabe, bis alle Sperrzeiten abgelaufen sind.

Ein Schaltvorgang des Windpark-Transformators 21 wirkt sich auf das Spannungsniveau aller Windenergieanlagen 14, 15, 16 aus, weswegen ein solcher Schaltvorgang nur dann vorgenommen werden sollte, wenn dies eine Entlastung einer Mehrzahl von Windenergieanlagen 14, 15, 16 zur Folge hat.

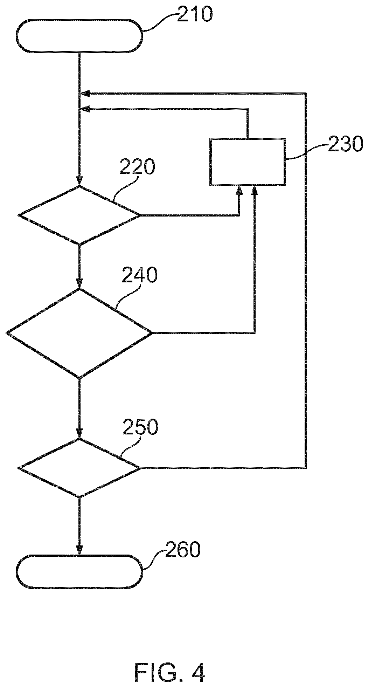

Den entsprechenden Ablauf zeigt Fig. 4. Nachdem in Schritt 210 eine Freigabe-Anfrage der Transformatorsteuerung 23 des Windpark-Transformators 21 eingegangen ist, wird in Schritt 220 geprüft, ob mindestens n Freigabe-Anfragen von Windenergieanlagen-Transformatoren 17 anhängig sind. Die Zahl n wird abhängig von der Gesamtzahl der Windenergieanlagen 14, 15, 16 des Windparks festgelegt. Liegen weniger als n Freigabe-Anfragen von Windenergieanlagen-Transformatoren 17 vor, so wird die Anfrage des Windpark-Transformators 21 an eine Warteschleife 230 übergeben, bis genügend Freigabe-Anfragen von Windenergieanlagen-Transformatoren 17 vorliegen.

Liegen wenigstens n Freigabe-Anfragen von Windenergieanlagen-Transformatoren 17 vor, so wird in Schritt 240 geprüft, ob wenigstens m dieser Anfragen sich auf einen Schaltvorgang in die gleiche Richtung beziehen. Dabei ist m eine Zahl kleiner oder gleich n. Ist dies nicht der Fall, wird die Anfrage an die Warteschleife 230 übergeben, bis eine ausreichende Anzahl von Anfragen zu Schaltvorgängen in die richtige Richtung vorliegt.

Liegen genügend Anfragen für Schaltvorgänge in die richtige Richtung vor, so wird bei 250 der Ablauf der Sperrzeiten geprüft und bei positivem Ergebnis der Abfrage in Schritt 260 die Freigabe an die Transformatorsteuerung 23 des Windpark-Transformators 21 erteilt.

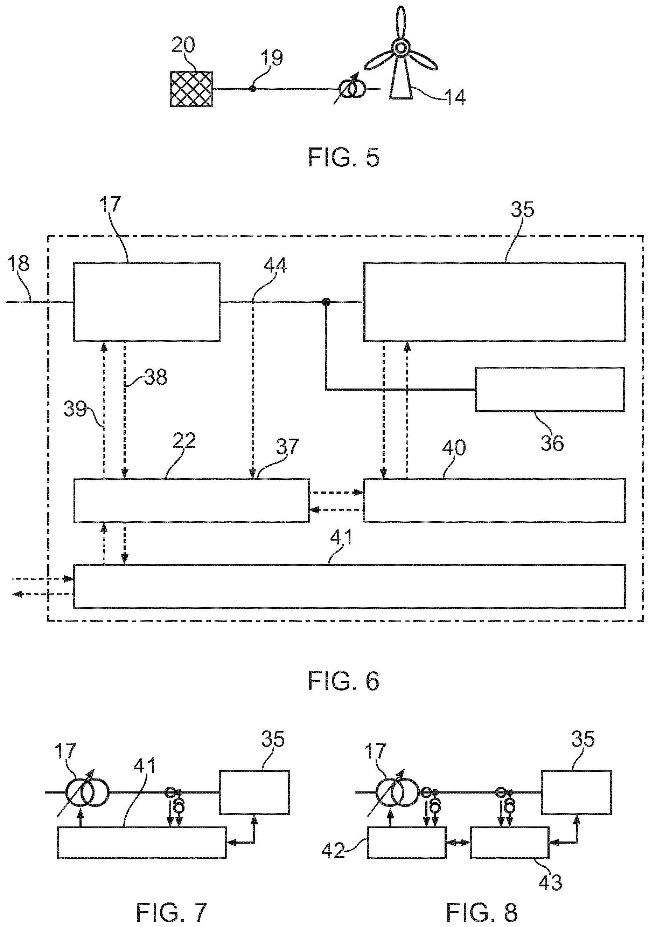

In Fig. 5 ist eine Ausführungsform der Erfindung dargestellt, bei der auch die übergeordnete Steuerung ein Bestandteil der Windenergieanlage 14 ist. Gemäß Fig. 6 umfasst die Windenergieanlage 14 ein Umrichter-Generator-System 35, von dem die elektrische Energie über den Windpark-Transformator 17 in das windparkinterne Netz 18 eingespeist wird. Ein Teil der elektrischen Energie wird abgezweigt und in ein Eigenbedarfsnetz 36 der Windenergieanlage 14 eingespeist. Die Transformatorsteuerung 22 erhält von einer Messvorrichtung 44 über einen Eingang 37 eine Information zu dem Istwert 24 der Spannung auf der Eingangsseite des Transformators 17.

Die Transformatorsteuerung 22 erhält außerdem über eine Kommunikationsleitung 38 eine Information über den aktuellen Schaltzustand des Transformators 17. Über eine Leitung 39 kann die Transformatorsteuerung 22 Steuervorgaben an den Transformator 17 leiten. Eine Umrichtersteuerung 40 kommuniziert mit dem Umrichter-Generator-System 35, um den richtigen Betriebspunkt einzustellen.

Kommt die Transformatorsteuerung 22 zu dem Ergebnis, dass gemäß dem über den Eingang 37 erhaltenen Istwert der Spannung ein Schaltvorgang des Transformators 17 durchgeführt werden sollte, richtet sie eine Freigabe-Anfrage an die übergeordnete Steuerung 41, die ebenfalls Bestandteil der Windenergieanlage ist. Die übergeordnete Steuerung 41 entscheidet anhand der ihr vorliegenden Informationen, die beispielsweise den Zustand des elektrischen Netzes oder von anderen Komponenten der Windenergieanlage betreffen, ob sie die Freigabe erteilt. Erst wenn die Freigabe vorliegt, leitet die Transformatorsteuerung 22 die Steuervorgabe an den Transformator 17.

Die übergeordnete Steuerung 41 kann ihrerseits so ausgelegt sein, dass sie eine Freigabe-Anfrage an die weiter übergeordnete Steuerung 31 des Windparks richtet und die Freigabe an die Transformatorsteuerung 22 nur erteilt, wenn sie von dort eine Freigabe erhält. In Ausnahmesituationen kann die Steuervorgabe auch ohne Freigabe an den Transformator geleitet werden.

Gemäß Fig. 7 können die Transformatorsteuerung 22, die Umrichtersteuerung 40 und die übergeordnete Steuerung 41 Bestandteil eines einheitlichen Steuermoduls 41 sein. In der Ausführungsform der Fig. 8 sind die betreffenden Komponenten auf zwei voneinander getrennte Module 42, 43 aufgeteilt.

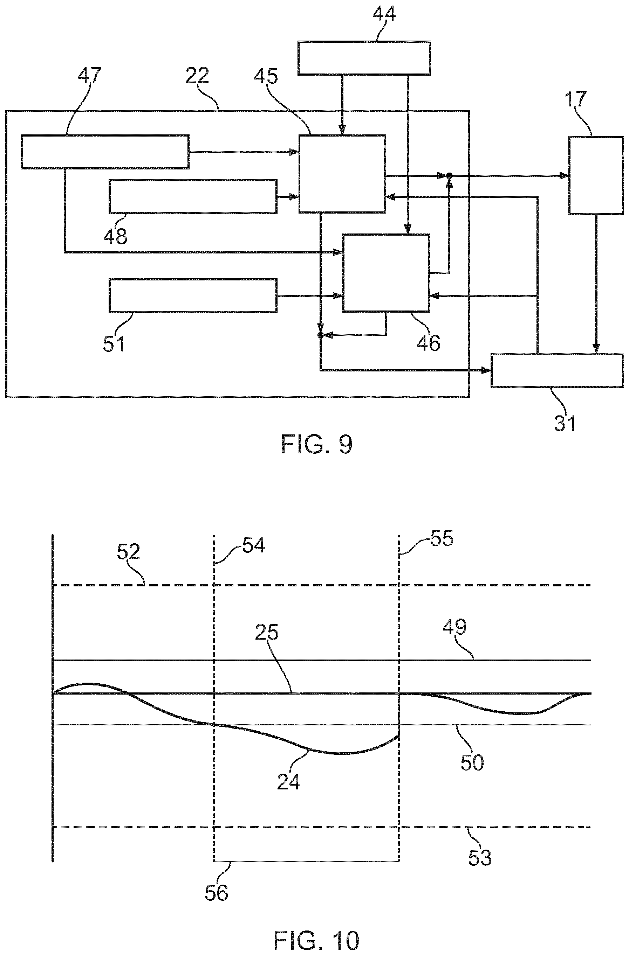

In Fig. 9 ist ein Ausführungsbeispiel dargestellt, bei dem die Transformatorsteuerung 22 des Windenergieanlagen-Transformators 17 dazu ausgelegt ist, mit einem zweigliedrigen Totband zu arbeiten. Die Transformatorsteuerung 22 umfasst zu diesem Zweck ein erstes Totband-Modul 45 und ein zweites Totband-Modul 46, die beide aus einem Speicher 47 mit einem Sollwert 25 für die Spannung versorgt werden. Ein Steuerelement 48 ist dazu ausgelegt, einen oberen Grenzwert 49 und einen unteren Grenzwert 50 für das erste Totband zu ermitteln. Ein Steuerelement 51 ist dazu ausgelegt, einen oberen Grenzwert 52 und einen unteren Grenzwert 53 für das zweite Totband zu ermitteln. Die Grenzwerte 49, 50, 52, 53 können abhängig vom Betriebspunkt der Windenergieanlage bzw. des Windparks variabel sein. Die Grenzwerte 49, 50 liegen näher an dem Sollwert 25 als die Grenzwerte 52, 53.

In dem Beispiel der Fig. 10 überschreitet der Istwert 24 der Spannung den Grenzwert 50 zum Zeitpunkt 54. Das erste Totband-Modul 45 sendet eine Freigabe-Anfrage an die übergeordnete Steuerung 31 und setzt eine Setzverzögerung 56 in Gang. Bei Ablauf der Setzverzögerung 56 liegt die Freigabe von der übergeordneten Steuerung 31 vor und der Schaltvorgang findet zum Zeitpunkt 55 statt.

Würde der Ist-Wert 24 der Spannung stattdessen einen der Grenzwerte 52, 53 des zweiten Totbands überschreiten bzw. unterschreiten, würde die Freigabe nach einer wesentlich kürzeren Setzverzögerung 56 erteilt. Diese Ausführungsform bietet also die Möglichkeit, auf unterschiedlich starke Abweichungen vom Sollwert unterschiedlich zu reagieren.

## Patentansprüche

1. Steuerungssystem für eine Windenergieanlage (14, 15, 16) oder für einen Windpark, umfassend eine Transformatorsteuerung (22, 23), dazu eingerichtet eine Information über einen Istzustand (24) eines elektrischen Netzes zu verarbeiten, um eine Steuervorgabe für einen Transformator (17, 21) mit einstellbarem Übersetzungsverhältnis zu ermitteln, wobei die Steuervorgabe erzeugt wird, wenn bei lokaler Betrachtung in der Transformatorsteuerung (22, 23) die Voraussetzungen für einen Schaltvorgang vorliegen, weiter umfassend eine übergeordnete Steuerung (31, 41), **dadurch gekennzeichnet, dass** die Transformatorsteuerung (22, 23) dazu ausgelegt ist, die Steuervorgabe zurückzuhalten, bis die Steuervorgabe von der übergeordneten Steuerung (31, 41) freigegeben ist.

2. Steuerungssystem nach Anspruch 1, **dadurch gekennzeichnet, dass** die Transformatorsteuerung (22, 23) dazu eigerichtet ist, einen Istwert (24) der Spannung im elektrischen Netz verarbeiten.

3. Steuerungssystem nach Anspruch 2, **dadurch gekennzeichnet, dass** die Transformatorsteuerung (22, 23) dazu eingerichtet ist, eine Steuervorgabe zu erzeugen, die einem Schaltvorgang des Transformators (17, 21) entspricht, wenn der Istwert (24) der Spannung ein Totband (26, 27) verlässt, das sich von einem Sollwert (25) der Spannung nach oben und nach unten erstreckt.

4. Steuerungssystem nach Anspruch 3, **dadurch gekennzeichnet, dass** die Transformatorsteuerung (22, 23) dazu eingerichtet ist, den Ist-wert (24) der Spannung mit einem ersten Totband und einem zweiten Totband zu vergleichen, wobei die Grenzwerte (49, 50) des ersten Totbands näher an dem Sollwert (25) liegen als die Grenzwerte (52, 53) des zweiten Totbands, und dass die Transformatorsteuerung (22, 23) bei Verlassen des ersten Totbands anders reagiert als bei Verlassen des zweiten Totbands.

5. Steuerungssystem nach einem der Ansprüche 1 bis 4, **dadurch gekennzeichnet, dass** die Transformatorsteuerung (22, 23) dazu eingerichtet ist, nach dem Erzeugen einer Steuervorgabe eine Setzverzögerung (29, 56) verstreichen zu lassen, bevor sie die Steuervorgabe an den Transformator (17, 21) leitet.

6. Steuerungssystem nach einem der Ansprüche 1 bis 5, **dadurch gekennzeichnet, dass** die Transformatorsteuerung (22, 23) dazu eingerichtet ist, nach dem Erzeugen einer Steuervorgabe eine Freigabe-Anfrage an die übergeordnete Steuerung (31, 41) zu senden.

7. Steuerungssystem nach einem der Ansprüche 1 bis 6, **dadurch gekennzeichnet, dass** die übergeordnete Steuerung (31, 41) dazu eingerichtet ist, Messwerte über den Zustand des elektrischen Netzes, Messwerte über Umgebungsbedingungen, Informationen von anderen Komponenten der Windenergieanlage/des Windparks und/oder Vorgaben von außen zu verarbeiten, um über die Freigabe der Steuervorgabe zu entscheiden.

8. Steuerungssystem nach einem der Ansprüche 1 bis 7, **dadurch gekennzeichnet, dass** die übergeordnete Steuerung (31, 41) dazu ausgelegt ist, die Freigabe der Steuervorgabe nicht zu erteilen, solange eine durch ein Ereignis in Gang gesetzte Sperrzeit läuft.

9. Steuerungssystem nach Anspruch 8, **dadurch gekennzeichnet, dass** das Steuerungssystem dazu eingerichtet ist, die Sperrzeit in der übergeordneten Steuerung (31, 41) durch eines oder mehrere der nachfolgenden Ereignisse in Gang zu setzen: ein Schaltvorgang eines Transformators (17, 21), ein Netzfehler, Zuschalten oder Abschalten des Windparks oder einer Komponente des Windparks, ein Schaltvorgang einer Blindleistungseinheit, eine sprunghafte Änderung einer Sollwert-Vorgabe.

10. Steuerungssystem nach Anspruch 8 oder 9, **dadurch gekennzeichnet, dass** die Länge der Sperrzeit individuell an das auslösende Ereignis angepasst ist.

11. Steuerungssystem nach einem der Ansprüche 1 bis 10, dass die übergeordnete Steuerung (31, 41) dazu eingerichtet ist, bei Vorliegen einer Mehrzahl von Freigabe-Anfragen den Freigabe-Anfragen eine Priorität zuzuordnen.

12. Steuerungssystem nach einem der Ansprüche 1 bis 11, **dadurch gekennzeichnet, dass** die übergeordnete Steuerung (31) der Steuerungsebene des Windparks zugeordnet ist.

13. Steuerungssystem nach einem der Ansprüche 1 bis 11, **dadurch gekennzeichnet, dass** die übergeordnete Steuerung (41) der Steuerungsebene einer Windenergieanlage (14) zugeordnet ist.

14. Verfahren zum Steuern einer Windenergieanlage (14, 15, 16) oder eines Windparks, bei dem eine Information über einen Istzustand (24) eines elektrischen Netzes verarbeitet wird, um eine Steuervorgabe für einen Transformator (17, 21) mit einstellbarem Übersetzungsverhältnis zu ermitteln, wobei die Steuervorgabe erzeugt wird, wenn bei lokaler Betrachtung in der Transformatorsteuerung (22, 23) die Voraussetzungen für einen Schaltvorgang vorliegen, **dadurch gekennzeichnet, dass** die Steuervorgabe zurückgehalten wird, bis die Steuervorgabe von einer übergeordneten Steuerung (31, 41) freigegeben ist.

## Claims

1. Control system for a wind energy installation (14, 15, 16) or for a wind farm, comprising a transformer controller (22, 23), configured to process information about an actual state (24) of an electrical grid in order to determine a control stipulation for a transformer (17, 21) having an adjustable transformation ratio, wherein the control stipulation is generated if the prerequisites for a switching process are present upon local consideration in the transformer controller (22, 23), further comprising a superordinate controller (31, 41), **characterized in that** the transformer controller (22, 23) is designed to withhold the control stipulation until the control stipulation is released by the superordinate controller (31, 41).

2. Control system according to Claim 1, **characterized in that** the transformer controller (22, 23) is configured to process an actual value (24) of the voltage in the electrical grid.

3. Control system according to Claim 2, **characterized in that** the transformer controller (22, 23) is configured to generate a control stipulation corresponding to a switching process of the transformer (17, 21) if the actual value (24) of the voltage leaves a dead band (26, 27) extending upwards and downwards from a setpoint value (25) of the voltage.

4. Control system according to Claim 3, **characterized in that** the transformer controller (22, 23) is configured to compare the actual value (24) of the voltage with a first dead band and a second dead band, wherein the limit values (49, 50) of the first dead band are closer to the setpoint value (25) than the limit values (52, 53) of the second dead band, and **in that** the transformer controller (22, 23) reacts differently when the first dead band is left by comparison with when the second dead band is left.

5. Control system according to any of Claims 1 to 4, **characterized in that** the transformer controller (22, 23) is configured to allow a set delay (29, 56) to elapse after the generation of a control stipulation before said transformer controller passes the control stipulation to the transformer (17, 21).

6. Control system according to any of Claims 1 to 5, **characterized in that** the transformer controller (22, 23) is configured to send a release request to the superordinate controller (31, 41) after the generation of a control stipulation.

7. Control system according to any of Claims 1 to 6, **characterized in that** the superordinate controller (31, 41) is configured to process measurement values about the state of the electrical grid, measurement values about ambient conditions, information from other components of the wind energy installation/wind farm and/or stipulations from outside, in order to take a decision about the release of the control stipulation.

8. Control system according to any of Claims 1 to 7, **characterized in that** the superordinate controller (31, 41) is designed not to grant the release of the control stipulation as long as an inhibit time initiated by an event is elapsing.

9. Control system according to Claim 8, **characterized in that** the control system is configured to initiate the inhibit time in the superordinate controller (31, 41) by one or more of the following events: a switching process of a transformer (17, 21), a grid fault, switching on or switching off of the wind farm or of a component of the wind farm, a switching process of a reactive power unit, an abrupt change in a setpoint value stipulation.

10. Control system according to Claim 8 or 9, **characterized in that** the length of the inhibit time is individually adapted to the triggering event.

11. Control system according to any of Claims 1 to 10, **characterized in that** the superordinate controller (31, 41) is configured when a plurality of release requests are present, to assign a priority to the release requests.

12. Control system according to any of Claims 1 to 11, **characterized in that** the superordinate controller (31) is assigned to the control level of the wind farm.

13. Control system according to any of Claims 1 to 11, **characterized in that** the superordinate controller (41) is assigned to the control level of a wind energy installation (14).

14. Method for controlling a wind energy installation (14, 15, 16) or a wind farm in which information about an actual state (24) of an electrical grid is processed in order to determine a control stipulation for a transformer (17, 21) having an adjustable transformation ratio, wherein the control stipulation is generated if the prerequisites for a switching process are present upon local consideration in the transformer controller (22, 23), **characterized in that** the control stipulation is withheld until the control stipulation is released by a superordinate controller (31, 41).

## Revendications

1. Système de commande pour un aérogénérateur (14, 15, 16) ou pour un parc éolien, comprenant une commande de transformateur (22, 23), conçue pour traiter une information à propos d'un état réel (24) d'un réseau électrique en vue de déterminer une consigne de commande pour un transformateur (17, 21) ayant un rapport de transformation variable, la consigne de commande étant générée lorsque, lors d'une observation locale dans la commande de transformateur (22, 23), les conditions pour une opération de commutation sont réunies, comprenant en outre une commande de niveau supérieur (31, 41), **caractérisé en ce que** la commande de transformateur (22, 23) est conçue pour maintenir la consigne de commande en attente jusqu'à ce que la consigne de commande soit validée par la commande de niveau supérieur (31, 41).

2. Système de commande selon la revendication 1, **caractérisé en ce que** la commande de transformateur (22, 23) est conçue pour traiter la valeur réelle (24) de la tension dans le réseau électrique.

3. Système de commande selon la revendication 2, **caractérisé en ce que** la commande de transformateur (22, 23) est conçue pour générer une consigne de commande qui correspond à une opération de commutation du transformateur (17, 21) lorsque la valeur réelle (24) de la tension quitte une bande morte (26, 27) qui s'étend vers le haut et vers le bas à partir d'une valeur de consigne (25) de la tension.

4. Système de commande selon la revendication 3, **caractérisé en ce que** la commande de transformateur (22, 23) est conçue pour comparer la valeur réelle (24) de la tension avec une première bande morte et une deuxième bande morte, les valeurs limites (49, 50) de la première bande morte étant plus proches de la valeur de consigne (25) que les valeurs limites (52, 53) de la deuxième bande morte, et **en ce que** la commande de transformateur (22, 23) réagit différemment en cas de sortie de la première bande morte qu'en cas de sortie de la deuxième bande morte.

5. Système de commande selon l'une des revendications 1 à 4, **caractérisé en ce que** la commande de transformateur (22, 23) est conçue pour, après avoir généré la consigne de commande, laisser s'écouler un retard de stabilisation (29, 56) avant d'acheminer la consigne de commande au transformateur (17, 21).

6. Système de commande selon l'une des revendications 1 à 5, **caractérisé en ce que** la commande de transformateur (22, 23) est conçue pour, après avoir généré la consigne de commande, envoyer une demande de validation à la commande de niveau supérieur (31, 41).

7. Système de commande selon l'une des revendications 1 à 6, **caractérisé en ce que** la commande de niveau supérieur (31, 41) est conçue pour traiter des valeurs mesurées à propos de l'état du réseau électrique, des valeurs mesurées à propos des conditions environnantes, des informations d'autres composants de l'aérogénérateur / du parc éolien et/ou des consignes provenant de l'extérieur en vue de prendre une décision à propos de la validation de la consigne de commande.

8. Système de commande selon l'une des revendications 1 à 7, **caractérisé en ce que** la commande de niveau supérieur (31, 41) est conçue pour ne pas octroyer la validation de la consigne de commande tant qu'un temps de blocage mis en œuvre par un événement s'écoule.

9. Système de commande selon la revendication 8, **caractérisé en ce que** le système de commande est conçu pour mettre en œuvre le temps de blocage dans la commande de niveau supérieur (31, 41) par l'un ou plusieurs des événements suivants :
une opération de commutation d'un transformateur (17, 21), un défaut du réseau, une mise en circuit ou mise hors circuit du parc éolien ou d'un composant du parc éolien, une opération de commutation d'une unité de puissance réactive, une modification soudaine d'une valeur de consigne.

10. Système de commande selon la revendication 8 ou 9, **caractérisé en ce que** la durée du temps de blocage est adaptée individuellement à l'événement déclencheur.

11. Système de commande selon l'une des revendications 1 à 10, **caractérisé en ce que** la commande de niveau supérieur (31, 41) est conçue pour, en présence d'une pluralité de demandes de validation, attribuer une priorité aux demandes de validation.

12. Système de commande selon l'une des revendications 1 à 11, **caractérisé en ce que** la commande de niveau supérieur (31) est affectée au niveau de commande du parc éolien.

13. Système de commande selon l'une des revendications 1 à 11, **caractérisé en ce que** la commande de niveau supérieur (41) est affectée au niveau de commande d'un aérogénérateur (14).

14. Procédé de commande d'un aérogénérateur (14, 15, 16) ou d'un parc éolien, avec lequel une information à propos d'un état réel (24) d'un réseau électrique est traitée en vue de déterminer une consigne de commande pour un transformateur (17, 21) ayant un rapport de transformation variable, la consigne de commande étant générée lorsque, lors d'une observation locale dans la commande de transformateur (22, 23), les conditions pour une opération de commutation sont réunies, **caractérisé en ce que** la consigne de commande est maintenue en attente jusqu'à ce que la consigne de commande soit validée par une commande de niveau supérieur (31, 41).
